# EUROPÄISCHE PATENTSCHRIFT

(11) **EP 3 714 837 B1**
(45) Veröffentlichungstag und Bekanntmachung des Hinweises auf die Patenterteilung: **23.11.2022**
(21) Anmeldenummer: 20165354.0
(22) Anmeldetag: 24.03.2020
(51) Int. Cl.: A61C 17/08

(54) **ZWEITEILIGE ABSAUGKANÜLE FÜR DENTALMEDIZINISCHE BEHANDLUNGEN**
TWO-PART SUCTION CANNULA FOR DENTAL TREATMENT
CANULE D'ASPIRATION EN DEUX PIÈCES POUR TRAITEMENTS MÉDICAUX DENTAIRES

(30) Priorität: 25.03.2019 DE 202019001370 U
(43) Veröffentlichungstag der Anmeldung: 30.09.2020
(73) Patentinhaber: Coltène/Whaledent GmbH + Co. KG, 89129 Langenau (DE)
(72) Erfinder: WOLFERT, Johannes, 89129 Langenau (DE)
(74) Vertreter: Forstmeyer, Dietmar

(56) Entgegenhaltungen:
- EP-A1- 0 457 220
- EP-A1- 1 378 209
- DE-A1- 10 065 705
- US-B1- 7 744 371

## Beschreibung

Die Erfindung betrifft eine Absaugkanüle gemäß dem Oberbegriff des Anspruchs 1. Eine solche zweigeteilte Absaugkanüle dient zum Absaugen von fluiden Substanzen aus einer Mundhöhle, insbesondere Wasser, Speichel oder Blut, bei einer dentalmedizinischen Behandlung. Sie umfasst ein Griffstück zum manuellen Handhaben der Absaugkanüle und eine mit dem Griffstück verbindbare Absaugspitze, die mittels des Griffstücks in die Mundhöhle einführbar ist. Das Griffstück weist ein Ansaugende, das eine Ansaugöffnung aufweist und mit der Absaugspitze verbindbar ist, ein Absaugende, das eine Absaugöffnung aufweist und mittels eines Absaugschlauches mit einer Saugvorrichtung verbindbar ist, und einen die Ansaugöffnung und die Absaugöffnung verbindenden, fluidleitenden Griffstück-Durchgang auf. Die Absaugspitze weist ein Einsaugende, das eine Einsaugöffnung aufweist, ein Auslassende mit einer Auslassöffnung, und einen die Einsaugöffnung und die Auslassöffnung verbindenden, fluidleitenden Absaugspitzen-Durchgang auf.

Absaugkanülen werden heutzutage routinemäßig und in großer Zahl bei der dentalmedizinischen Behandlung eingesetzt. Neben der einteiligen Bauweise, bei der das Griffstück und die Absaugspitze aus einem einstückigen Teil gebildet werden (siehe z. B. DE 20 2018 001 691 U1 und EP 1 522 272 B1), gibt es auch die zweigeteilte Bauweise, bei der die Absaugkanüle aus einem Griffstück und einer darin eingesetzten Absaugspitze gebildet wird (siehe z. B. EP 1 378 209 A1 DE 20 2005 009 738 U1, EP 1 752 110 B1, EP 1 955 672 A1, JP 2016-198307 A, WO 2013/007876 A1 und WO 2014/141215 A1). Bei den zweiteiligen Absaugkanülen werden die zwei Komponenten Griffstück und Absaugspitze getrennt ausgeliefert und zum Anwenden der Absaugkanüle vom Anwender, z B. einem Zahnarzt oder zahntechnischen Assistenten, zusammengesteckt. Das Griffstück wird in der Regel mehrfach verwendet, die damit verbindbare Absaugspitze als Disposable nur einmal bei einem Patienten.

Bei der praktischen Anwendung von Absaugkanülen ergeben sich zwei Probleme, die durch die bekannten Absaugkanülen nicht in zufriedenstellender Weise gelöst werden. Zum einen besteht das Problem einer starken Geräuschbildung, sowohl beim Absaugen von Luft als auch von fluiden Substanzen. Diese Geräusche entstehen durch die Strömung und insbesondere durch Verwirbelungen in der Strömung und lassen sich bei bekannten Absaugkanülen nur durch geräuschdämmende Schichten reduzieren, die jedoch die Kosten erhöhen, das Gewicht der Absaugkanüle vergrößern und das Sterilisieren der Absaugkanülen, beispielsweise durch Autoklavieren, beeinträchtigen können.

Das andere sich stellende Problem wird mit Reflux bezeichnet. Reflux entsteht, wenn sich die Absaugspitze beim Gebrauch festsaugt, z. B. an der Zunge, dem Weichgewebe, der Haut oder einem sonstigen Teil der Mundhöhle. In diesem Fall kommt der Luftstrom durch die Absaugkanüle und den Absaugschlauch zum Erliegen und in dem Absaugspitzen-Durchgang und dem Griffstück-Durchgang bildet sich ein Unterdruck, der dazu führen kann, dass in der Absaugvorrichtung, dem Absaugschlauch oder der Absaugkanüle vorhandene Reste fluider Substanzen entgegen der normalen Saugrichtung fließen und bis zur Absaugspitze gelangen und dort aus der Absaugkanüle austreten und in Kontakt mit der Mundhöhle gelangen können. Das ist aus praktischen und hygienischen Gründen unerwünscht. Zur Vermeidung von Reflux werden nach dem Stand der Technik kleine Löcher auf der Oberseite der Absaugkanüle angebracht, durch die Fremd- oder Falschluft angesaugt wird, sodass auch beim Festsaugen der Absaugspitze ein kleiner Luftstrom verbleibt. Diese nach dem Stand der Technik gebräuchlichen kleinen Löcher verringern die Saugleistung der Absaugkanüle und erhöhen das Strömungsgeräusch.

Ausgehend von diesem Stand der Technik liegt der vorliegenden Erfindung die Aufgabe zugrunde, eine Absaugkanüle zu schaffen, die beim Gebrauch eine geringere Geräuschentwicklung aufweist und, zumindest bei geringen Refluxmengen, den Reflux verhindert.

Diese Aufgabe wird erfindungsgemäß durch eine Vorrichtung mit den Merkmalen des beigefügten Anspruchs 1 gelöst. Bevorzugte Ausgestaltungen und Weiterbildungen der Erfindung ergeben sich aus den abhängigen Ansprüchen und der nachfolgenden Beschreibung.

Die Erfindung definiert eine zweigeteilte Absaugkanüle zum Absaugen von fluiden Substanzen aus einer Mundhöhle, insbesondere Wasser, Speichel oder Blut, bei einer dentalmedizinischen Behandlung, umfasst ein Griffstück zum manuellen Handhaben der Absaugkanüle und eine mit dem Griffstück verbindbare Absaugspitze, die mittels des Griffstücks in die Mundhöhle einführbar ist, wobei das Griffstück ein Ansaugende, das eine Ansaugöffnung aufweist und mit der Absaugspitze verbindbar ist, ein Absaugende, das eine Absaugöffnung aufweist und mittels eines Absaugschlauches mit einer Saugvorrichtung verbindbar ist, und einen die Ansaugöffnung und die Absaugöffnung verbindenden, fluidleitenden Griffstück-Durchgang aufweist, und wobei die Absaugspitze ein Einsaugende, das eine Einsaugöffnung aufweist, ein Auslassende mit einer Auslassöffnung, und einen die Einsaugöffnung und die Auslassöffnung verbindenden, fluidleitenden Absaugspitzen-Durchgang aufweist, wobei die Absaugspitze einen distalen, von dem Griffstück abgewandten und der Mundhöhle zugewandten Saugabschnitt aufweist, der sich von der Einsaugöffnung der Absaugspitze ausgehend in proximaler Richtung entlang der Absaugspitze erstreckt, die Absaugspitze einen proximalen, dem Griffstück zugewandten und von der Mundhöhle abgewandten Einsteckabschnitt aufweist, der sich von der Auslassöffnung der Absaugspitze ausgehend in distaler Richtung über eine Einstecklänge entlang der Absaugspitze erstreckt, und das Ansaugende des Griffstücks eine mit dem Einsteckabschnitt der Absaugspitze korrespondierende Absaugspitzen-Aufnahme aufweist, wobei der Einsteckabschnitt der Absaugspitze und die Absaugspitzen-Aufnahme des Griffstücks derart ausgebildet sind, dass zum Befestigen der Absaugspitze an dem Griffstück der Einsteckabschnitt der Absaugspitze über die Einstecklänge in die Absaugspitzen-Aufnahme des Griffstücks hineingesteckt werden kann, wobei im Bereich des distalen Endes des Einsteckabschnitts der Absaugspitze Halte- und Dichtungsmittel vorgesehen sind, die den Einsteckabschnitt der Absaugspitze in der Absaugspitzen-Aufnahme des Griffstücks halten und eine fluiddichte Abdichtung der Absaugspitze in dem Griffstück bewirken, und im Bereich des proximalen Endes des Einsteckabschnitts der Absaugspitze zwischen dem Einsteckabschnitt der Absaugspitze und der Absaugspitzen-Aufnahme ein Ringspalt mit einer Ringspalttiefe verbleibt, in dem der Einsteckabschnitt der Absaugspitze nicht an der Absaugspitzen-Aufnahme des Griffstücks anliegt, und dass der Absaugspitzen-Durchgang eine trichterförmige Form hat, wobei sich der Strömungsquerschnitt von der Einsaugöffnung zu der Auslassöffnung verkleinert dadurch gekennzeichnet dass
- die Tiefe (28) des Ringspaltes um das proximale Ende des Einsteckabschnitts der Absaugspitze zwischen 20% und 60% der Länge der Absaugspitze und zwischen 80% und 250% des Innendurchmessers des Griffstück-Durchgangs in dem Bereich des Ringspaltes beträgt und
- die lichte Weite des Ringspaltes um das proximale Ende des Einsteckabschnitts der Absaugspitze zwischen 5% und 30% des Innendurchmessers des Griffstück-Durchgangs in dem Bereich des Ringspaltes beträgt verkleinert.

Die Richtungsangaben "distal" und "proximal" sind dabei immer auf das Griffstück bezogen, das von einem Benutzer in die Hand genommen wird. Dementsprechend bezeichnet "distal" die Richtung, die von der Absaugspitze oder dem Griffstück weg zu der Mundhöhle des Patienten weist, und "proximal" die Richtung, die von der Mundhöhle des Patienten zu der Absaugspitze oder dem Griffstück hin weist.

Erfindungsgemäß wird eine Kombination von Merkmalen vorgeschlagen, die im Wesentlichen zwei Punkte umfasst, nämlich dass einerseits die Absaugspitze in das Ansaugende des Griffstücks hineingesteckt wird, wobei das in das Griffstück hineingesteckte Ende so lang ist, dass es frei in das Griffstück hineinragt und einen Ringspalt um das proximale, eingesteckte Ende der Absaugspitze bildet, der auch als Hinterschnitt bezeichnet werden kann, und dass andererseits der Absaugspitzen-Durchgang eine trichterförmige Gestalt hat.

Auf diese Weise werden Geräusche bei der Anwendung minimiert und der Reflux kann durch den Ringspalt und eine fluiddichte Abdichtung der Absaugspitze in dem Griffstück verhindert werden. Sowohl die Geräuschminderung als auch die Verhinderung des Reflux können auch nur mit einer dieser beiden Maßnahmen erzielt werden, d. h. nur mit einem Ringspalt um das in das Griffstück hineingesteckte Ende der Absaugspitze oder nur mit der trichterförmigen Gestalt des Absaugspitzen-Durchgangs. Mit der erfindungsgemäßen Kombination dieser Merkmale wird jedoch eine besonders gute, synergistische Wirkung erzielt.

Die Tiefe des Ringspaltes, das heißt die Länge des Hinterschnitts, mit dem die Absaugspitze frei in das Griffstück hineinragt, beeinflusst die Geräuschentwicklung. Wenn diese Tiefe zu klein ist, geht der geräuschreduzierende Effekt verloren. Gemäß der vorliegenden Erfindung beträgt die Tiefe des Ringspaltes um das proximale Ende des Einsteckabschnitts der Absaugspitze zwischen 20 % und 60 %, bevorzugt zwischen 25 % und 40 % der Länge der Absaugspitze. Ferner beträgt die Tiefe des Ringspaltes um das proximale Ende des Einsteckabschnitts der Absaugspitze zwischen 80 % und 250 %, bevorzugt zwischen 100 % und 200 % des Innendurchmessers des Griffstück-Durchgangs in dem Bereich des Ringspaltes.

Aber auch die lichte Weite, das heißt die Breite des Ringspaltes, hat einen Einfluss auf die Geräuschminderung. Gemäß der vorliegenden Erfindung beträgt die lichte Weite des Ringspaltes um das proximale Ende des Einsteckabschnitts der Absaugspitze zwischen 5 % und 30 %, bevorzugt zwischen 10 % und 20 % des Innendurchmessers des Griffstück-Durchgangs in dem Bereich des Ringspaltes.

Gemäß einer ersten vorteilhaften Ausführungsform kann der Ringspalt derart ausgebildet sein, dass er über die Ringspalttiefe eine gleichmäßige lichte Weite aufweist. In diesem Fall hat der Ringspalt eine zylindrische Form. Nach einer anderen vorteilhaften Ausführung wird vorgeschlagen, dass sich die lichte Weite des Ringspaltes über die Ringspalttiefe von seinem distalen Ende zu seinem proximalen Ende hin vergrößert. Diese Vergrößerung der Ringspaltweite kann gleichmäßig oder stetig, z. B. konusförmig erfolgen, es können aber auch Knicke oder Stufen darin ausgebildet sein.

Bei einem Ringspalt mit einer sich über seine Tiefe verändernden lichten Weite kann es ferner vorteilhaft sein, wenn das Verhältnis der lichten Weite des Ringspaltes zwischen seinem proximalen und seinem distalen Ende zwischen 4:1 und 1,5:1, bevorzugt zwischen 3:1 und 2:1 beträgt.

Eine trichterförmige Form des Absaugspitzen-Durchgangs, die zu einer Geräuschminderung führt, kann auf vielfältige Weise realisiert sein. Eine erste Ausführungsform kann darin bestehen, dass sich der Strömungsquerschnitt des Absaugspitzen-Durchgangs über die gesamte Länge der Absaugspitze verkleinert. Diese Abnahme des Strömungsquerschnitts kann gleichmäßig oder stetig, z. B. konusförmig erfolgen, es können aber auch Knicke oder Stufen in dem Absaugspitzen-Durchgang ausgebildet sein.

Eine zweite, bevorzugte Ausführungsform kann darin bestehen, dass sich der Strömungsquerschnitt des Absaugspitzen-Durchgangs im Bereich des distalen Endes der Absaugspitze verkleinert und der Absaugspitzen-Durchgang im Bereich des distalen Endes der Absaugspitze einen Abschnitt mit konstantem Strömungsquerschnitt aufweist. In diesem Fall hat der Absaugspitzen-Durchgangs beispielsweise an seinem distalen Ende einen sich in proximaler Richtung konusförmig verjüngenden Querschnitt, an den sich an dem proximalen Ende der Absaugspitze ein rohrförmiger Abschnitt mit konstantem Querschnitt anschließt. Gemäß einem weiteren vorteilhaften Merkmal kann bei der zweiten Ausführungsform vorgesehen sein, dass die Länge des Abschnitts des proximalen Endes der Absaugspitze mit konstantem Strömungsquerschnitt zwischen 50 % und 150 %, bevorzugt zwischen 75 % und 125 % der Tiefe des Ringspaltes beträgt.

Die Verkleinerung des freien Strömungsquerschnitts in dem Absaugspitzen-Durchgang durch dessen trichterförmige Ausbildung führen zu einer Geräuschminderung beim Gebrauch der Absaugkanüle. Je kleiner der Strömungsquerschnitt an dem proximalen Ende des Absaugspitzen-Durchgangs ist, desto leiser ist die Absaugkanüle. Da die Verkleinerung des freien Strömungsquerschnitts auch zu einer Verringerung der Saugleistung der Absaugkanüle führt, sollte die engste Öffnung am Austrittsende des Trichters so gewählt werden, dass die Saugleistung nicht bedeutsam beeinträchtigt wird, sich aber noch eine deutliche Geräuschminderung ergibt. In dieser Hinsicht ist es vorteilhaft, wenn das Verhältnis der Strömungsquerschnitte des Absaugspitzen-Durchgangs zwischen seinem distalen und seinem proximalen Ende zwischen 4:1 und 1,5:1, bevorzugt zwischen 3:1 und 2:1 beträgt.

Um die Absaugspitze und das Griffstück möglichst unaufwändig herstellen und zusammenfügen zu können, wird nach einem vorteilhaften Merkmal vorgeschlagen, dass der Einsteckabschnitt der Absaugspitze und die Absaugspitzen-Aufnahme des Griffstücks derart ausgebildet sind, dass die in die Absaugspitzen-Aufnahme hineingesteckte Absaugspitze durch eine als Halte- und Dichtungsmittel wirkende Press- oder Klemmpassung in der Absaugspitzen-Aufnahme gehalten wird. In diesem Fall werden keine weiteren Verbindungsmittel oder eine Kupplungseinrichtung benötigt, sondern die mechanische Verbindung kann durch aufeinander abgestimmte elastische Eigenschaften und Abmessungen von Absaugspitze und Griffstück bewirkt werden. Auch das Herausziehen einer benutzten Absaugspitze aus dem Griffstück zum Auswechseln gegen eine andere Absaugspitze wird auf diese Weise erleichtert, ohne dass dafür ein Entriegelungsmechanismus betätigt oder ein Werkzeug verwendet werden muss.

In weiterer Ausgestaltung kann vorteilhafterweise vorgesehen sein, dass das Griffstück aus einem harten, nicht-elastischen Material, vorzugsweise aus einer Hartplastik oder einem harten Kunststoff besteht, beispielsweise aus PP Kunststoff. Ein hartes Griffstück ermöglicht es, die Absaugkanüle sicher zu greifen und zu führen sowie damit ausreichend Kraft zu übertragen, beispielsweise um damit die Lippen eines Patienten abzuhalten.

Ferner kann vorteilhafterweise vorgesehen sein, dass die Absaugspitze aus einem weichen, elastischen Elastomer, vorzugsweise aus einem weichen Kunststoff besteht, z. B. aus TPE Material. Dadurch werden unbeabsichtigte Verletzungen des Patienten vermieden.

Die Kombination aus hartem Griffstück und weicher Absaugspitze kann derart gewählt werden, dass eine gute Abhaltefunktion gewährleistet bleibt. Das bedeutet, dass trotz der weichen Absaugspitze eine Kraft mit der Absaugkanüle ausgeübt werden kann, um beispielsweise die Lippe zur Seite zu drücken. Um dies zu verbessern, kann zudem der Bereich der Absaugspitze, der Kontakt zum Patienten hat, möglichst klein gestaltet werden. Ferner kann die Unterseite der Absaugspitze, die am weitesten vorsteht und beim Kontakt der Absaugspitze mit dem Patienten eine Druckangriffsfläche bildet, dickwandiger und damit stabiler ausgebildet sein, damit auch eine weiche Absaugspitze diese Kraft besser aufnehmen kann.

Zur Verbesserung der Geräuschminderung wird vorgeschlagen, dass der Absaugspitzen-Durchgang und der Griffstück-Durchgang eine glatte innere Oberfläche aufweisen, das heißt ohne Kanten und Grate sind. Bevorzugt sind die glatten inneren Oberflächen des Absaugspitzen-Durchgangs und des Griffstück-Durchgang spiegelpoliert. Das bedeutet z. B., dass die Oberfläche des zur Herstellung verwendeten Spritzgusswerkzeugs spiegelpoliert ist.

Um eine gute Abdichtung zwischen der Absaugspitze und dem Griffstück zu Erzielen, damit beim Absaugen keine Falschluft angesaugt und der Reflux verhindert wird, wird nach einem weiteren vorteilhaften Merkmal vorgeschlagen, dass die Absaugkanüle vier beabstandet nebeneinander angeordnete Dichtringe aufweist, die im Bereich des Einsteckabschnitts der Absaugspitze angeordnet sind und die fluiddichte Abdichtung der Absaugspitze in dem Griffstück bewirken. Zumindest wenn die Refluxmenge nicht groß ist, insbesondere im Bereich einiger Tropfen beträgt, kann auf diese Weise verhindert werden, dass der Reflux aus der Absaugkanüle austritt und in Kontakt mit dem Patienten gelangt.

Eine vorteilhafte Weiterbildung kann darin bestehen, dass die Dichtringe im Bereich des distalen Endes des Ansaugendes des Griffstücks angeordnet sind, wenn der Einsteckabschnitt der Absaugspitze in die Absaugspitzen-Aufnahme des Griffstücks hineingesteckt ist. Auf diese Weise kann der Ringspalt möglichst tief ausgebildet werden. Nach einem anderen vorteilhaften Merkmal wird vorgeschlagen, dass Dichtringe in distaler Richtung neben dem Boden des Ringspaltes angeordnet sind, wenn der Einsteckabschnitt der Absaugspitze in die Absaugspitzen-Aufnahme des Griffstücks hineingesteckt ist.

Die Dichtringe können auf verschiedene Weise realisiert werden. Eine Ausführungsform kann darin bestehen, dass sie als O-Ringe ausgebildet sind, die in die Innenseite des Griffstücks eingelassen oder auf die Außenseite des Absaugstück aufgezogen werden. Eine bevorzugte Ausführungsform besteht darin, dass die Dichtringe einstückig in der Absaugspitze angeformt sind, also aus demselben Material wie die Absaugspitze bestehen und mit dieser in einem Stück gefertigt werden.

Vorteilhafte Ausbildungen der verschiedenen Aspekte der Erfindung sind Gegenstand der Unteransprüche. Weitere Merkmale, Vorteile und Anwendungsmöglichkeiten der Erfindung ergeben sich aus der nachfolgenden Beschreibung im Zusammenhang mit den Figuren. Es zeigen, teilweise schematisiert,
- Fig. 1: eine perspektivische Ansicht einer erfindungsgemäßen Absaugkanüle mit einem Griffstück und einer darin eingesetzten Absaugspitze,
- Fig. 2: die Absaugkanüle von Figur 1 mit aus dem Griffstück herausgezogener Absaugspitze,
- Fig. 3: eine perspektivische Ansicht der Absaugspitze von Figur 1,
- Fig. 4: eine Seitenansicht der Absaugspitze von Figur 1 und
- Fig. 5: einen Teillängsschnitt zu Figur 1.

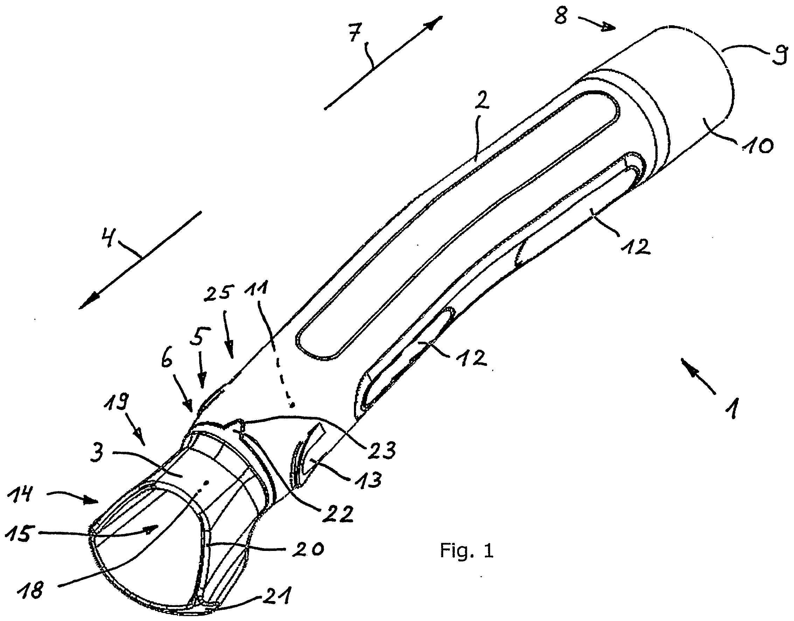

Die Figur 1 zeigt eine perspektivische Ansicht einer erfindungsgemäßen zweigeteilten Absaugkanüle 1 zum Absaugen von fluiden Substanzen aus einer Mundhöhle, insbesondere Wasser, Speichel oder Blut, bei einer dentalmedizinischen Behandlung. Die Absaugkanüle 1 umfasst ein Griffstück 2 zum manuellen Handhaben der Absaugkanüle 1 und eine mit dem Griffstück 2 verbindbare Absaugspitze 3, die mittels des Griffstücks 2 in die Mundhöhle einführbar ist.

Das Griffstück 2 weist an seinem in distaler Richtung 4 gelegenen Ende ein distales Ansaugende 5 auf, das eine Ansaugöffnung 6 aufweist und mit der Absaugspitze 3 verbindbar ist. Ferner weist das Griffstück 2 an seinem in proximaler Richtung 7 gelegenen Ende ein proximales Absaugende 8 auf, das eine Absaugöffnung 9 aufweist und mittels eines nicht dargestellten Absaugschlauches mit einer ebenfalls nicht dargestellten Saugvorrichtung verbindbar ist. Zum Anschließen des Absaugschlauches an das Absaugende 8 des Griffstücks 2 kann das Griffstück 2 an dem Absaugende 8 einen Konus 10 aufweisen. Im Innern des Griffstücks 2 verläuft ein die Ansaugöffnung 6 und die Absaugöffnung 8 verbindender, fluidleitender Griffstück-Durchgang 11.

Das Griffstück 2 kann gerade, gebogen oder wie in dem dargestellten Ausführungsbeispiel gewinkelt sein. Das Griffstück 2 kann Kennzeichnungsfelder 12 aufweisen und Griffmulden 13 zum Greifen, die auch derart ausgebildet sein können, dass sie ein irrtümliches Anschließen des Absaugschlauches an das Ansaugende 5 verhindern.

Die Absaugspitze 3 weist ein distales Einsaugende 14 auf, das eine Einsaugöffnung 15 aufweist, ein proximales Auslassende 16 mit einer Auslassöffnung 17, und einen die Einsaugöffnung 15 und die Auslassöffnung 17 verbindenden, fluidleitenden Absaugspitzen-Durchgang 18. In Figur 1 ist die Absaugspitze 3 mit dem Griffstück 2 verbunden, sodass die dargestellte Absaugkanüle 1 gebrauchsfertig zusammengebaut ist.

Die Absaugspitze 3 weist einen distalen, von dem Griffstück 2 abgewandten und der Mundhöhle zugewandten Saugabschnitt 19 auf, der sich von der Einsaugöffnung 15 der Absaugspitze 3 ausgehend in proximaler Richtung entlang der Absaugspitze 3 erstreckt. Dieser Saugabschnitt 19 der Absaugspitze 3, der in Kontakt mit dem Patienten kommen kann und vorzugsweise über eine Vorstehlänge aus dem Griffstück 2 hervorsteht, kann in üblicher Weise gestaltet sein. Hierzu zählen beispielsweise die Anschrägung 20 der Einsaugöffnung 15, die flügelartige Verbreiterung (Pelotte) 21 zum Beabstanden der Einsaugöffnung 15 von anatomischen Strukturen der Mundhöhle des Patienten und eine kleine Nase 22 an der Oberseite der Absaugspitze 3, die anzeigt, in welcher Richtung und gegenseitiger Orientierung die Absaugspitze 3 und das Griffstück 2 zusammengesteckt werden sollen. Die Nase 22 kann in einer korrespondierenden Kerbe 23 in dem Griffstück 2 sitzen, um sicherzustellen oder anzuzeigen, dass die Absaugspitze 3 in der richtigen Gebrauchslage und mit ausreichender Tiefe in das Griffstück 2 hineingesteckt ist. Die Absaugspitze 3 ist frei von scharfen Kanten, um Verletzungen und unangenehme Berührungen im Patientenmund zu vermeiden.

Die Absaugspitze 3 weist auch einen proximalen, dem Griffstück 2 zugewandten und von der Mundhöhle abgewandten Einsteckabschnitt 24 auf, der sich von der Auslassöffnung 17 der Absaugspitze 3 ausgehend in distaler Richtung über eine Einstecklänge entlang der Absaugspitze 3 erstreckt.

Das Ansaugende 5 des Griffstücks 2 weist eine mit dem Einsteckabschnitt 24 der Absaugspitze 3 korrespondierende Absaugspitzen-Aufnahme 25 auf. Dabei sind der Einsteckabschnitt 24 der Absaugspitze 3 und die Absaugspitzen-Aufnahme 25 des Griffstücks 2 derart ausgebildet, dass zum Befestigen der Absaugspitze 2 an dem Griffstück 2 der Einsteckabschnitt 24 der Absaugspitze 3 über die Einstecklänge in die Absaugspitzen-Aufnahme 25 des Griffstücks 2 hineingesteckt werden kann.

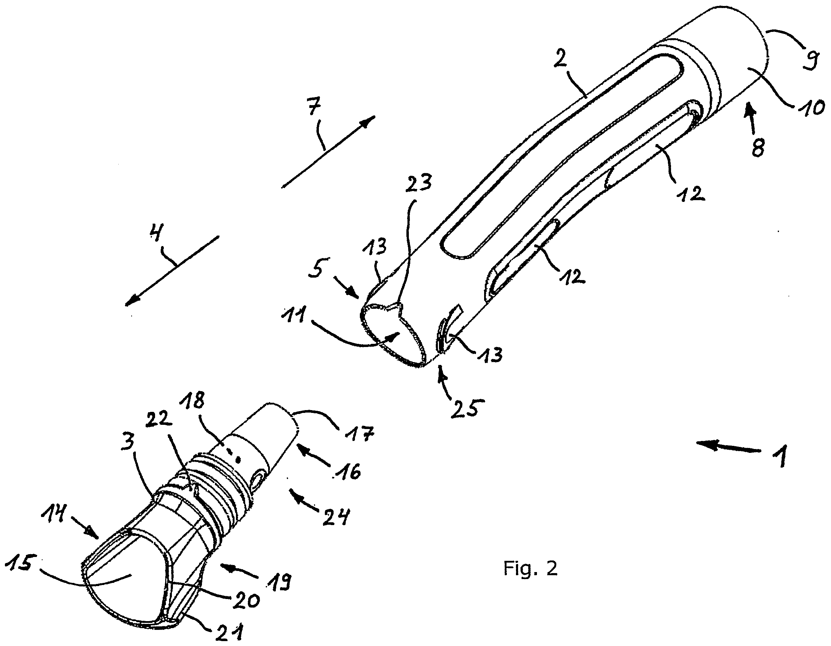

Die Figur 2 zeigt die Absaugkanüle 1 von Figur 1, wobei die Absaugspitze 3 aus dem Griffstück 2 herausgezogen ist bzw. kurz bevor die Absaugspitze 3 in proximaler Richtung mit ihrem Einsteckabschnitt 24 in das Ansaugende 5 des Griffstücks 2 hineingesteckt wird.

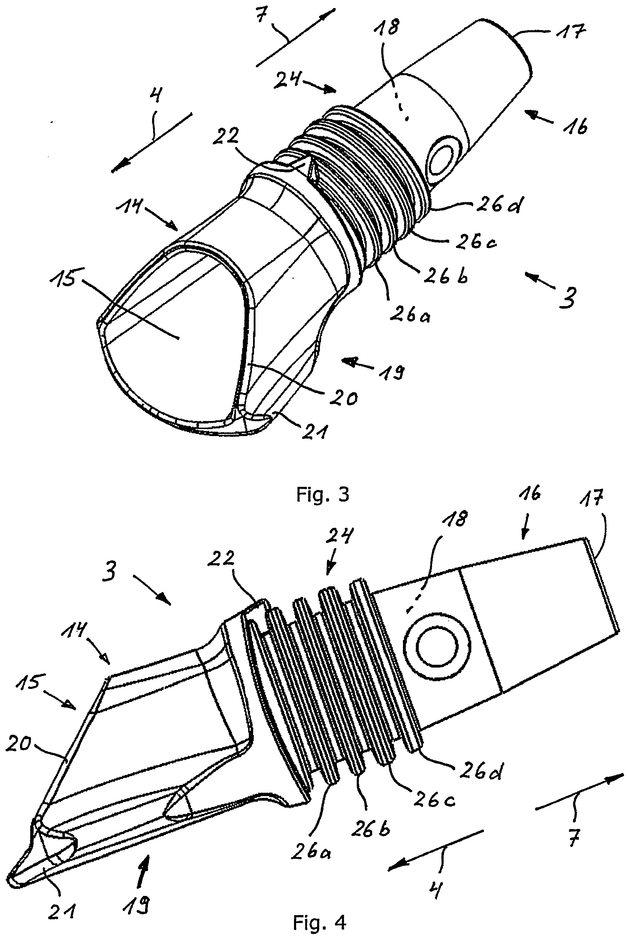

Die Absaugspitze 3 von Figur 1 ist in einer perspektivischen Ansicht in Figur 3 und in einer Seitenansicht in Figur 4 dargestellt. Man erkennt hier gut die im Bereich des distalen Endes des Einsteckabschnitts 24 der Absaugspitze 3 angeordneten Halte- und Dichtungsmittel, die den Einsteckabschnitt 24 der Absaugspitze 3 in der Absaugspitzen-Aufnahme 25 des Griffstücks 2 halten und eine fluiddichte Abdichtung der Absaugspitze 3 in dem Griffstück 2 bewirken. In dem dargestellten Ausführungsbeispiel umfassen sie vier beabstandet nebeneinander angeordnete Dichtringe 26a, 26b, 26c, 26d, die im Bereich des Einsteckabschnitts 24 der Absaugspitze 3 angeordnet sind und die fluiddichte Abdichtung der Absaugspitze 3 in dem Griffstück 2 bewirken. Die Absaugspitze 3 wird durch eine Klemmpassung der vier Dichtringe 26a, 26b, 26c, 26d in dem Griffstück 2 gehalten und abgedichtet.

Die Dichtringe 26a, 26b, 26c, 26d können auf verschiedene Weise realisiert werden, beispielsweise auch als O-Ringe. In der dargestellten bevorzugten Ausführungsform sind die Dichtringe 26a, 26b, 26c, 26d einstückig in der Absaugspitze 3 angeformt.

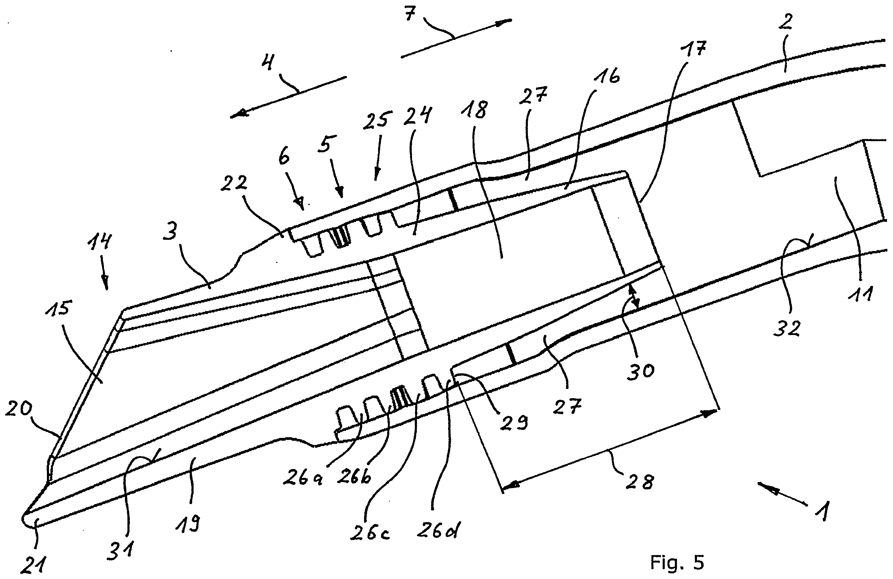

Die Figur 5 zeigt in einem Teillängsschnitt durch die Absaugkanüle 1 der Figur 1 den inneren Aufbau der Absaugspitze 3 und des Ansaugendes 5 des Griffstücks 2. Der Einsteckabschnitt 24 der Absaugspitze 3 und die Absaugspitzen-Aufnahme 25 des Griffstücks 2 sind derart ausgebildet, dass die in die Absaugspitzen-Aufnahme 25 hineingesteckte Absaugspitze 3 durch eine als Halte- und Dichtungsmittel wirkende Press- oder Klemmpassung in der Absaugspitzen-Aufnahme 25 gehalten wird.

Im Bereich des distalen Endes des Einsteckabschnitts 24 der Absaugspitze 3 sind Halte- und Dichtungsmittel vorgesehen, die den Einsteckabschnitt 24 der Absaugspitze 3 in der Absaugspitzen-Aufnahme 25 des Griffstücks 2 halten und eine fluiddichte Abdichtung der Absaugspitze 3 in dem Griffstück 2 bewirken und wie oben erläutert als vier beabstandet nebeneinander angeordnete, einstückig in der Absaugspitze angeformte Dichtringe 26a, 26b, 26c, 26d ausgebildet sind. Die Dichtringe 26a, 26b, 26c, 26d sind im Bereich des distalen Endes des Ansaugendes 5 des Griffstücks 2 angeordnet, wenn der Einsteckabschnitt 24 der Absaugspitze 3 in die Absaugspitzen-Aufnahme 25 des Griffstücks 2 hineingesteckt ist.

Der Einsteckabschnitt 24 der Absaugspitze 3 ist derart ausgebildet, dass im Bereich des proximalen Endes des Einsteckabschnitts 24 zwischen dem Einsteckabschnitt 24 der Absaugspitze 3 und der Absaugspitzen-Aufnahme 25 ein Ringspalt 27 mit einer Ringspalttiefe 28 verbleibt, in dem der Einsteckabschnitt 24 der Absaugspitze 3 nicht an der Absaugspitzen-Aufnahme 25 des Griffstücks 2 anliegt. Die Dichtringe 26a, 26b, 26c, 26d sind in distaler Richtung neben dem Boden 29 des Ringspaltes 27 angeordnet, wenn der Einsteckabschnitt 24 der Absaugspitze 3 in die Absaugspitzen-Aufnahme 25 des Griffstücks 2 hineingesteckt ist.

Ferner hat der Absaugspitzen-Durchgang 18 eine trichterförmige Form, wobei sich der Strömungsquerschnitt von der Einsaugöffnung 15 zu der Auslassöffnung 17 verkleinert. Mit Strömungsquerschnitt ist dabei der quer zur Längsachse des Absaugspitzen-Durchgangs 18 gemessene Querschnitt des Absaugspitzen-Durchgangs 18 gemeint, also ohne Berücksichtigung der Vergrößerung der Einsaugöffnung 15 durch deren Anschrägung 20, das heißt schrägen Anschnitt gegenüber der Längsachse des Absaugspitzen-Durchgangs 18 bzw. der Absaugspitze 3.

Die Tiefe 28 des Ringspaltes 27 um das proximale Ende des Einsteckabschnitts 24 der Absaugspitze 3, das heißt die Länge des Ringspaltes 27 gemessen in Richtung der Längsachse des Absaugspitzen-Durchgangs 18 bzw. der Absaugspitze 3, beträgt in dem Ausführungsbeispiel ca. 33 % der Länge der Absaugspitze 3. Erfindungsgemässe Werte hierfür liegen zwischen 20 % und 60 %, bevorzugt zwischen 25 % und 40 %.

Die Tiefe 28 des Ringspaltes 27 um das proximale Ende des Einsteckabschnitts 24 der Absaugspitze 3 beträgt in dem Ausführungsbeispiel ca. 140 % des Innendurchmessers des Griffstück-Durchgangs 11 in dem Bereich des Ringspaltes 27. Erfindungsgemässe Werte hierfür liegen zwischen 80 % und 250 %, bevorzugt zwischen 100 % und 200 %.

Die lichte Weite 30 des Ringspaltes 27 um das proximale Ende des Einsteckabschnitts 24 der Absaugspitze 3 beträgt in dem Ausführungsbeispiel ca. 13 % des Innendurchmessers des Griffstück-Durchgangs 11 in dem Bereich des Ringspaltes 27. Erfindungsgemässe Werte hierfür liegen zwischen 5 % und 30 %, bevorzugt zwischen 10 % und 20 %. Der Ringspalt 27 kann über die Ringspalttiefe 28 eine gleichmäßige lichte Weite 30 aufweisen. In dem Ausführungsbeispiel vergrößert sich die lichte Weite 30 des Ringspaltes 27 über die Ringspalttiefe 28 von seinem distalen Ende, also von seinem Boden 29, zu seinem proximalen Ende hin. Dabei ist es vorteilhaft, wenn das Verhältnis der lichten Weite 30 des Ringspaltes 27 zwischen seinem proximalen und seinem distalen Ende zwischen 4:1 und 1,5:1, bevorzugt zwischen 3:1 und 2:1 beträgt.

Die Absaugspitze 3 kann derart ausgebildet sein, dass sich der Strömungsquerschnitt des Absaugspitzen-Durchgangs 18 in proximaler Richtung über die gesamte Länge der Absaugspitze 3 verkleinert. In dem dargestellten Ausführungsbeispiel ist die Absaugspitze 3 derart ausgebildet, dass sich der Strömungsquerschnitt des Absaugspitzen-Durchgangs 18 im Bereich des distalen Endes der Absaugspitze 3 verkleinert und der Absaugspitzen-Durchgang 18 im Bereich des proximalen Endes der Absaugspitze 3 einen Abschnitt mit konstantem Strömungsquerschnitt aufweist. Die Länge des Abschnitts des proximalen Endes der Absaugspitze 3 mit konstantem Strömungsquerschnitt beträgt in dem Ausführungsbeispiel ca. 110 % der Tiefe 28 des Ringspaltes 27. Vorteilhafte Werte hierfür liegen zwischen 50 % und 150 %, bevorzugt zwischen 75 % und 125 %.

Das Verhältnis der Strömungsquerschnitte des Absaugspitzen-Durchgangs 18 zwischen seinem distalen und seinem proximalen Ende beträgt in dem Ausführungsbeispiel ca. 2,25:1. Vorteilhafte Werte hierfür liegen zwischen 4:1 und 1,5:1, bevorzugt zwischen 3:1 und 2:1.

Der Absaugspitzen-Durchgang 18 und der Griffstück-Durchgang 11 weisen eine glatte innere Oberfläche 31, 32 auf. Die glatten inneren Oberflächen 31, 32 sind beispielsweise spiegelpoliert.

### Bezugszeichenliste

- 1: Absaugkanüle
- 2: Griffstück
- 3: Absaugspitze
- 4: distale Richtung
- 5: Ansaugende
- 6: Ansaugöffnung
- 7: proximale Richtung
- 8: Absaugende
- 9: Absaugöffnung
- 10: Konus
- 11: Griffstück-Durchgang
- 12: Kennzeichnungsfeld
- 13: Griffmulde
- 14: Einsaugende
- 15: Einsaugöffnung
- 16: Auslassende
- 17: Auslassöffnung
- 18: Absaugspitzen-Durchgang
- 19: Saugabschnitt
- 20: Anschrägung
- 21: Verbreiterung
- 22: Nase
- 23: Kerbe
- 24: Einsteckabschnitt
- 25: Absaugspitzen-Aufnahme
- 26a: Dichtring
- 26b: Dichtring
- 26c: Dichtring
- 26d: Dichtring
- 27: Ringspalt
- 28: Ringspalttiefe
- 29: Boden
- 30: lichte Weite
- 31: innere Oberfläche
- 32: innere Oberfläche

## Patentansprüche

1. Zweigeteilte Absaugkanüle (1) zum Absaugen von fluiden Substanzen aus einer Mundhöhle, insbesondere Wasser, Speichel oder Blut, bei einer dentalmedizinischen Behandlung, umfassend ein Griffstück (2) zum manuellen Handhaben der Absaugkanüle (1) und eine mit dem Griffstück (2) verbindbare Absaugspitze (3), die mittels des Griffstücks (2) in die Mundhöhle einführbar ist,
wobei das Griffstück (2) ein Ansaugende (5), das eine Ansaugöffnung (6) aufweist und mit der Absaugspitze (3) verbindbar ist, ein Absaugende (8), das eine Absaugöffnung (9) aufweist und mittels eines Absaugschlauches mit einer Saugvorrichtung verbindbar ist, und einen die Ansaugöffnung (5) und die Absaugöffnung (9) verbindenden, fluidleitenden Griffstück-Durchgang (11) aufweist,
und wobei die Absaugspitze (3) ein Einsaugende (14), das eine Einsaugöffnung (15) aufweist, ein Auslassende (16) mit einer Auslassöffnung (17), und einen die Einsaugöffnung (15) und die Auslassöffnung (17) verbindenden, fluidleitenden Absaugspitzen-Durchgang (18) aufweist,
wobei die Absaugspitze (3) einen distalen, von dem Griffstück (2) abgewandten und der Mundhöhle zugewandten Saugabschnitt (19) aufweist, der sich von der Einsaugöffnung (15) der Absaugspitze (3) ausgehend in proximaler Richtung entlang der Absaugspitze (3) erstreckt,
die Absaugspitze (3) einen proximalen, dem Griffstück (2) zugewandten und von der Mundhöhle abgewandten Einsteckabschnitt (24) aufweist, der sich von der Auslassöffnung (17) der Absaugspitze (3) ausgehend in distaler Richtung über eine Einstecklänge entlang der Absaugspitze (3) erstreckt,
und das Ansaugende (5) des Griffstücks (2) eine mit dem Einsteckabschnitt (24) der Absaugspitze (3) korrespondierende Absaugspitzen-Aufnahme (25) aufweist, wobei der Einsteckabschnitt (24) der Absaugspitze (3) und die Absaugspitzen-Aufnahme (25) des Griffstücks (2) derart ausgebildet sind, dass zum Befestigen der Absaugspitze (3) an dem Griffstück (2) der Einsteckabschnitt (24) der Absaugspitze (3) über die Einstecklänge in die Absaugspitzen-Aufnahme (25) des Griffstücks (2) hineingesteckt werden kann,
wobei im Bereich des distalen Endes des Einsteckabschnitts (24) der Absaugspitze (3) Halte- und Dichtungsmittel vorgesehen sind, die den Einsteckabschnitt (24) der Absaugspitze (3) in der Absaugspitzen-Aufnahme (25) des Griffstücks (2) halten und eine fluiddichte Abdichtung der Absaugspitze (3) in dem Griffstück (2) bewirken,
und im Bereich des proximalen Endes des Einsteckabschnitts (24) der Absaugspitze (3) zwischen dem Einsteckabschnitt (24) der Absaugspitze (3) und der Absaugspitzen-Aufnahme (25) ein Ringspalt (27) mit einer Ringspalttiefe (28) verbleibt, in dem der Einsteckabschnitt (24) der Absaugspitze (3) nicht an der Absaugspitzen-Aufnahme (25) des Griffstücks (2) anliegt,
und dass der Absaugspitzen-Durchgang (18) eine trichterförmige Form hat, wobei sich der Strömungsquerschnitt von der Einsaugöffnung (15) zu der Auslassöffnung (17) verkleinert,
**dadurch gekennzeichnet, dass**
die Tiefe (28) des Ringspaltes (27) um das proximale Ende des Einsteckabschnitts (24) der Absaugspitze (3) zwischen 20 % und 60 % der Länge der Absaugspitze (3) und zwischen 80 % und 250 % des Innendurchmessers des Griffstück-Durchgangs (11) in dem Bereich des Ringspaltes (27) beträgt; und
die lichte Weite (30) des Ringspaltes (27) um das proximale Ende des Einsteckabschnitts (24) der Absaugspitze (3) zwischen 5 % und 30 % des Innendurchmessers des Griffstück-Durchgangs (11) in dem Bereich des Ringspaltes (27) beträgt.

2. Absaugkanüle (1) nach Anspruch 1, **dadurch gekennzeichnet, dass** die Tiefe (28) des Ringspaltes (27) um das proximale Ende des Einsteckabschnitts (24) der Absaugspitze (3) zwischen 25 % und 40 % der Länge der Absaugspitze (3) beträgt; und/oder
**dadurch gekennzeichnet, dass** die Tiefe (28) des Ringspaltes (27) um das proximale Ende des Einsteckabschnitts (24) der Absaugspitze (3) zwischen 100 % und 200 % des Innendurchmessers des Griffstück-Durchgangs (11) in dem Bereich des Ringspaltes (27) beträgt.

3. Absaugkanüle (1) nach einem der vorhergehenden Ansprüche, **dadurch gekennzeichnet, dass** die lichte Weite (30) des Ringspaltes (27) um das proximale Ende des Einsteckabschnitts (24) der Absaugspitze (3) zwischen 10 % und 20 % des Innendurchmessers des Griffstück-Durchgangs (11) in dem Bereich des Ringspaltes (27) beträgt.

4. Absaugkanüle (1) nach einem der vorhergehenden Ansprüche, **dadurch gekennzeichnet, dass** der Ringspalt (27) über die Ringspalttiefe (28) eine gleichmäßige lichte Weite (30) aufweist.

5. Absaugkanüle (1) nach einem der vorhergehenden Ansprüche, **dadurch gekennzeichnet, dass** sich die lichte Weite (30) des Ringspaltes (27) über die Ringspalttiefe (28) von seinem distalen Ende zu seinem proximalen Ende hin vergrößert;
wobei das Verhältnis der lichten Weite (30) des Ringspaltes (27) zwischen seinem proximalen und seinem distalen Ende vorzugsweise zwischen 4:1 und 1,5:1, besonders bevorzugt zwischen 3:1 und 2:1 beträgt.

6. Absaugkanüle (1) nach einem der vorhergehenden Ansprüche, **dadurch gekennzeichnet, dass** sie derart ausgebildet ist, dass sich der Strömungsquerschnitt des Absaugspitzen-Durchgangs (18) über die gesamte Länge der Absaugspitze (3) verkleinert.

7. Absaugkanüle (1) nach einem der vorhergehenden Ansprüche, **dadurch gekennzeichnet, dass** sie derart ausgebildet ist, dass sich der Strömungsquerschnitt des Absaugspitzen-Durchgangs (18) im Bereich des distalen Endes der Absaugspitze (3) verkleinert und der Absaugspitzen-Durchgang (18) im Bereich des proximalen Endes der Absaugspitze (3) einen Abschnitt mit konstantem Strömungsquerschnitt aufweist;
wobei die Länge des Abschnitts des proximalen Endes der Absaugspitze (3) mit konstantem Strömungsquerschnitt vorzugsweise zwischen 50 % und 150 %, besonders bevorzugt zwischen 75 % und 125 % der Tiefe (28) des Ringspaltes (27) beträgt.

8. Absaugkanüle (1) nach einem der vorhergehenden Ansprüche, **dadurch gekennzeichnet, dass** das Verhältnis der Strömungsquerschnitte des Absaugspitzen-Durchgangs (18) zwischen seinem distalen und seinem proximalen Ende zwischen 4:1 und 1,5:1, bevorzugt zwischen 3:1 und 2:1 beträgt.

9. Absaugkanüle (1) nach einem der vorhergehenden Ansprüche, **dadurch gekennzeichnet, dass** der Einsteckabschnitt (24) der Absaugspitze (3) und die Absaugspitzen-Aufnahme (25) des Griffstücks (2) derart ausgebildet sind, dass die in die Absaugspitzen-Aufnahme (25) hineingesteckte Absaugspitze (3) durch eine als Halte- und Dichtungsmittel wirkende Press- oder Klemmpassung in der Absaugspitzen-Aufnahme (25) gehalten wird.

10. Absaugkanüle (1) nach einem der vorhergehenden Ansprüche, **dadurch gekennzeichnet, dass** das Griffstück (2) aus einem harten, nicht-elastischen Material, vorzugsweise aus einer Hartplastik oder einem harten Kunststoff besteht.

11. Absaugkanüle (1) nach einem der vorhergehenden Ansprüche, **dadurch gekennzeichnet, dass** die Absaugspitze (3) aus einem weichen, elastischen Elastomer, vorzugsweise aus einem weichen Kunststoff besteht.

12. Absaugkanüle (1) nach einem der vorhergehenden Ansprüche, **dadurch gekennzeichnet, dass** der Absaugspitzen-Durchgang (18) und der Griffstück-Durchgang (11) eine glatte innere Oberfläche (31, 32) aufweisen;
wobei die glatte innere Oberfläche (31, 32) des Absaugspitzen-Durchgangs (18) und des Griffstück-Durchgangs (11) vorzugsweise spiegelpoliert ist.

13. Absaugkanüle (1) nach einem der vorhergehenden Ansprüche, **dadurch gekennzeichnet, dass** sie vier beabstandet nebeneinander angeordnete Dichtringe (26a, 26b, 26c, 26d) aufweist, die im Bereich des Einsteckabschnitts (24) der Absaugspitze (3) angeordnet sind und die fluiddichte Abdichtung der Absaugspitze (3) in dem Griffstück (2) bewirken;
wobei die Dichtringe (26a, 26b, 26c, 26d) vorzugsweise im Bereich des distalen Endes des Ansaugendes (5) des Griffstücks (2) angeordnet sind, wenn der Einsteckabschnitt (24) der Absaugspitze (3) in die Absaugspitzen-Aufnahme (25) des Griffstücks (2) hineingesteckt ist.

14. Absaugkanüle (1) nach Anspruch 13, **dadurch gekennzeichnet, dass** die Dichtringe (26a, 26b, 26c, 26d) in distaler Richtung neben dem Boden (29) des Ringspaltes (27) angeordnet sind, wenn der Einsteckabschnitt (24) der Absaugspitze (3) in die Absaugspitzen-Aufnahme (25) des Griffstücks (2) hineingesteckt ist; und/oder **dadurch gekennzeichnet, dass** die Dichtringe (26a, 26b, 26c, 26d) einstückig in der Absaugspitze (3) angeformt sind.

## Claims

1. Two-part withdrawal cannula (1) for withdrawal of fluid substances from an oral cavity, in particular water, saliva or blood, in a dental medical treatment, comprising a handle (2) for manual handling of the withdrawal cannula (1) and a withdrawal tip (3) that can be connected to the handle (2) and can be inserted into the oral cavity by means of the handle (2),
wherein the handle (2) has a suction end (5) which has a withdrawal opening (6) and can be connected to the withdrawal tip (3), a withdrawal end (8) which has a withdrawal opening (9) and can be connected to a withdrawal device by means of a withdrawal hose and has a fluid-conducting handle passage (11) connecting the suction opening (5) and the withdrawal opening (9),
and wherein the withdrawal tip (3) has an aspiration end (14) which has an aspiration opening (15), an outlet end (16) with an outlet opening (17), and has a fluid-conducting withdrawal tip passage (18) connecting the a aspiration opening (15) and the outlet opening (17),
wherein the withdrawal tip (3) has a distal withdrawal section (19) which faces away from the handle (2) and faces the oral cavity and extends from the aspiration opening (15) of the withdrawal tip (3) in the proximal direction along the withdrawal tip (3),
the withdrawal tip (3) has a proximal plug-in section (24) facing the handle (2) and facing away from the oral cavity, which extends from the outlet opening (17) of the withdrawal tip (3) in distal direction along an insertion length along the withdrawal tip (3),
and the suction end (5) of the handle (2) has a withdrawal tip receptacle (25) corresponding to the insertion section (24) of the withdrawal tip (3), the insertion section (24) of the withdrawal tip (3) and the withdrawal tip receptacle (25) of the handle (2) being designed in such a way that the insertion section (24) of the withdrawal tip (3) can be inserted into the withdrawal tip receptacle (25) of the handle (2) along the insertion length in order to attach the withdrawal tip (3) to the handle (2),
wherein in the region of the distal end of the insertion section (24) of the withdrawal tip (3) holding and sealing means are provided which hold the insertion section (24) of the withdrawal tip (3) in the withdrawal tip receptacle (25) of the handle (2) and cause a fluid-tight seal of the withdrawal tip (3) in the handle (2),
and in the area of the proximal end of the insertion section (24) of the withdrawal tip (3) between the insertion section (24) of the withdrawal tip (3) and the withdrawal tip receptacle (25) an annular gap (27) remains with an annular gap depth (28) in which the insertion section (24) of the withdrawal tip (3) does not rest against the withdrawal tip receptacle (25) of the handle (2),
and the withdrawal tip passage (18) has a funnel-shaped shape, with the flow cross-section decreasing from the withdrawal opening (15) to the outlet opening (17),
**characterized in that**
the depth (28) of the annular gap (27) around the proximal end of the insertion section (24) of the withdrawal tip (3) is between 20% and 60% of the length of the withdrawal tip (3) and between 80% and 250% of the inside diameter of the handle passage (11) in the area of the annular gap (27); and
the clear width (30) of the annular gap (27) around the proximal end of the insertion section (24) of the withdrawal tip (3) is between 5% and 30% of the inside diameter of the handle passage (11) in the area of the annular gap (27).

2. Withdrawal cannula (1) according to claim 1, **characterized in that** the depth (28) of the annular gap (27) around the proximal end of the insertion section (24) of the withdrawal tip (3) is between 25% and 40% the length of the withdrawal tip (3); and or
**characterized in that** the depth (28) of the annular gap (27) around the proximal end of the insertion section (24) of the withdrawal tip (3) is between 100% and 200% of the inside diameter of the handle passage (11) in the area of the annular gap (27).

3. Withdrawal cannula (1) according to one of the preceding claims, **characterized in that** the clear width (30) of the annular gap (27) around the proximal end of the insertion section (24) of the withdrawal tip (3) is between 10% and 20% % of the inside diameter of the handle passage (11) in the area of the annular gap (27).

4. Withdrawal cannula (1) according to one of the preceding claims, **characterized in that** the annular gap (27) has a uniform clear width (30) over the annular gap depth (28).

5. Withdrawal cannula (1) according to one of the preceding claims, **characterized in that** the clear width (30) of the annular gap (27) increases over the annular gap depth (28) from its distal end to its proximal end;
wherein the ratio of the clear width (30) of the annular gap (27) between its proximal and its distal end is preferably between 4:1 and 1.5:1, particularly preferably between 3:1 and 2:1.

6. Withdrawal cannula (1) according to one of the preceding claims, **characterized in that** it is designed in such a way that the flow cross section of the withdrawal tip passage (18) is reduced over the entire length of the withdrawal tip (3).

7. Withdrawal cannula (1) according to any one of the preceding claims, **characterized in that** it is designed in such a way that the flow cross-section of the withdrawal tip passage (18) in the region of the distal end of the withdrawal tip (3) is reduced and the withdrawal tip passage (18) in the region of the proximal end of the withdrawal tip (3) has a section with a constant flow cross-section;
wherein the length of the section of the proximal end of the withdrawal tip (3) with a constant flow cross-section is preferably between 50% and 150%, particularly preferably between 75% and 125% of the depth (28) of the annular gap (27) .

8. Withdrawal cannula (1) according to one of the preceding claims, **characterized in that** the ratio of the flow cross sections of the withdrawal tip passage (18) between its distal end and its proximal end is between 4:1 and 1.5:1, preferably between 3:1 and 2:1.

9. Withdrawal cannula (1) according to any one of the preceding claims, **characterized in that** the insertion section (24) of the withdrawal tip (3) and the withdrawal tip receptable (25) of the handle (2) are designed in such a way that the withdrawal tip (3) inserted into the withdrawal tip receptacle (25) is held in the withdrawal tip receptacle (25) by a press or clamp fit acting as a holding and sealing means.

10. Withdrawal cannula (1) according to one of the preceding claims, **characterized in that** the handle (2) consists of a hard, non-elastic material, preferably a hard plastic or a hard synthetic material.

11. Withdrawal cannula (1) according to one of the preceding claims, **characterized in that** the withdrawal tip (3) consists of a soft, elastic elastomer, preferably a soft plastic.

12. Withdrawal cannula (1) according to one of the preceding claims, **characterized in that** the withdrawal tip passage (18) and the handle passage (11) have a smooth inner surface (31, 32),
wherein the smooth inner surface (31, 32) of the withdrawal tip passage (18) and the handle passage (11) preferably being mirror polished.

13. Withdrawal cannula (1) according to one of the preceding claims, **characterized in that** it has four sealing rings (26a, 26b, 26c, 26d) arranged at a distance from one another and which are arranged in the region of the insertion section (24) of the withdrawal tip (3) and cause the fluid-tight sealing of the withdrawal tip (3) in the handle (2);
wherein the sealing rings (26a, 26b, 26c, 26d) preferably being arranged in the region of the distal end of the withdrawal end (5) of the handle (2) when the insertion section (24) of the withdrawal tip (3) is inserted into the withdrawal tip receptable (25) of the handle (2).

14. Withdrawal cannula (1) according to claim 13,
**characterized in that** the sealing rings (26a, 26b, 26c, 26d) are arranged in the distal direction next to the base (29) of the annular gap (27) when the insertion section (24) of the withdrawal tip (3) is inserted into the withdrawal tip receptacle (25) of the handle (2); and or
**characterized in that** the sealing rings (26a, 26b, 26c, 26d) are integrally formed in the withdrawal tip (3).

## Revendications

1. Canule d'extraction par aspiration (1) en deux parties pour extraire par aspiration hors d'une cavité buccale des substances fluides, en particulier de l'eau, de la salive ou du sang, lors d'un traitement médical-dentaire, comprenant une poignée (2) pour la manipulation manuelle de la canule d'extraction (1) et une pointe d'extraction (3) pouvant être reliée à la poignée (2), qui peut être introduite dans la cavité buccale au moyen de la poignée (2),
dans laquelle
la poignée (2) comprend une extrémité d'aspiration (5) qui présente une ouverture d'aspiration (6) et qui peut être reliée à la pointe d'extraction (3), une extrémité d'extraction (8) qui présente une ouverture d'extraction (9) et qui peut être reliée à un dispositif d'aspiration au moyen d'un tuyau d'extraction, et un passage de poignée (11) conduisant le fluide et reliant l'ouverture d'aspiration (5) et l'ouverture d'extraction (9),
et la pointe d'extraction (3) comprend une extrémité de succion (14) qui présente une ouverture de succion (15), une extrémité de sortie (16) munie d'une ouverture de sortie (17), et un passage de pointe d'extraction (18) conduisant le fluide et reliant l'ouverture de succion (14) et l'ouverture de sortie (17),
la pointe d'extraction (3) présente une portion d'aspiration distale (19), détournée de la poignée (2) et tournée vers la cavité buccale, qui s'étend en direction proximale le long de la pointe d'extraction (3) en partant de l'ouverture de succion (15) de la pointe d'extraction (3),
la pointe d'extraction (3) présente une portion d'enfichage (24) proximale, tournée vers la poignée (2) et détournée de la cavité buccale, qui s'étend en direction distale sur une longueur d'enfichage le long de la pointe d'extraction (3) en partant de l'ouverture de sortie (17) de la pointe d'extraction (3),
et l'extrémité d'aspiration (5) de la poignée (2) présente un logement de pointe d'extraction (25) correspondant à la portion d'enfichage (24) de la pointe d'extraction (3), la portion d'enfichage (24) de la pointe d'extraction (3) et le logement de pointe d'extraction (25) de la poignée (2) étant réalisés de telle sorte que, pour fixer la pointe d'extraction (3) à la poignée (2), la portion d'enfichage (24) de la pointe d'extraction (3) peut être enfichée dans le logement de pointe d'extraction (25) de la poignée (2) sur la longueur d'enfichage,
des moyens de maintien et d'étanchéité sont prévus dans la zone de l'extrémité distale de la portion d'enfichage (25) de la pointe d'extraction (3), lesquels maintiennent la portion d'enfichage (24) de la pointe d'extraction (3) dans le logement de pointe d'extraction (25) de la poignée (2) et assurent une étanchéité aux fluides de la pointe d'extraction (3) dans la poignée (2),
et dans la zone de l'extrémité proximale de la portion d'enfichage (24) de la pointe d'extraction (3), entre la portion d'enfichage (24) de la pointe d'extraction (3) et le logement de pointe d'extraction (25), il reste une fente annulaire (27) avec une profondeur de fente annulaire (28), dans laquelle la portion d'enfichage (24) de la pointe d'extraction (3) n'est pas en appui contre le logement de pointe d'extraction (25) de la poignée (2),
et le passage de pointe d'extraction (18) est en forme d'entonnoir, la section transversale d'écoulement diminuant depuis l'ouverture de succion (15) vers l'ouverture de sortie (17),
**caractérisée en ce que**
la profondeur (28) de la fente annulaire (27) autour de l'extrémité proximale de la portion d'enfichage (24) de la pointe d'extraction (3) est comprise entre 20 % et 60 % de la longueur de la pointe d'extraction (3) et entre 80 % et 250 % du diamètre intérieur du passage de poignée (11) dans la zone de la fente annulaire (27) ; et
la largeur libre (30) de la fente annulaire (27) autour de l'extrémité proximale de la portion d'enfichage (24) de la pointe d'extraction (3) est comprise entre 5 % et 30 % du diamètre intérieur du passage de poignée (11) dans la zone de la fente annulaire (27).

2. Canule d'extraction par aspiration (1) selon la revendication 1,
**caractérisée en ce que**
la profondeur (28) de la fente annulaire (27) autour de l'extrémité proximale de la portion d'enfichage (24) de la pointe d'extraction (3) est comprise entre 25 % et 40 % de la longueur de la pointe d'extraction (3) ; et/ou
**en ce que** la profondeur (28) de la fente annulaire (27) autour de l'extrémité proximale de la portion d'enfichage (24) de la pointe d'extraction (3) est comprise entre 100 % et 200 % du diamètre intérieur du passage de poignée (11) dans la zone de la fente annulaire (27).

3. Canule d'extraction par aspiration (1) selon l'une des revendications précédentes,
**caractérisée en ce que**
la largeur libre (30) de la fente annulaire (27) autour de l'extrémité proximale de la portion d'enfichage (24) de la pointe d'extraction (3) est comprise entre 10 % et 20 % du diamètre intérieur du passage de poignée (11) dans la zone de la fente annulaire (27).

4. Canule d'extraction par aspiration (1) selon l'une des revendications précédentes,
**caractérisée en ce que**
la fente annulaire (27) présente une largeur libre (30) régulière sur la profondeur de fente annulaire (28).

5. Canule d'extraction par aspiration (1) selon l'une des revendications précédentes,
**caractérisée en ce que** la largeur libre (30) de la fente annulaire (27) augmente sur la profondeur de fente annulaire (28) depuis son extrémité distale vers son extrémité proximale ;
le rapport de la largeur libre (30) de la fente annulaire (27) entre son extrémité proximale et son extrémité distale étant de préférence compris entre 4:1 et 1,5:1, de manière particulièrement préférée entre 3:1 et 2:1.

6. Canule d'extraction par aspiration (1) selon l'une des revendications précédentes,
**caractérisée en ce qu'**elle est réalisée de telle sorte que la section transversale d'écoulement du passage de pointe d'extraction (18) diminue sur toute la longueur de la pointe d'extraction (3).

7. Canule d'extraction par aspiration (1) selon l'une des revendications précédentes,
**caractérisée en ce qu'**elle est réalisée de telle sorte que la section transversale d'écoulement du passage de pointe d'extraction (18) diminue dans la zone de l'extrémité distale de la pointe d'extraction (3) et que le passage de pointe d'extraction (18) présente une portion à section d'écoulement constante dans la zone de l'extrémité proximale de la pointe d'extraction (3) ;
la longueur de la portion de l'extrémité proximale de la pointe d'extraction (3) à section d'écoulement constante étant de préférence comprise entre 50 % et 150%, de manière particulièrement préférée entre 75 % et 125 % de la profondeur (28) de la fente annulaire (27).

8. Canule d'extraction par aspiration (1) selon l'une des revendications précédentes,
**caractérisée en ce que** le rapport des sections transversales d'écoulement du passage de pointe d'extraction (18) entre son extrémité distale et son extrémité proximale est compris entre 4:1 et 1,5:1, de préférence entre 3:1 et 2:1.

9. Canule d'extraction par aspiration (1) selon l'une des revendications précédentes,
**caractérisée en ce que** la portion d'enfichage (24) de la pointe d'extraction (3) et le logement de pointe d'extraction (25) de la poignée (2) sont réalisés de telle sorte que la pointe d'extraction (3) enfichée dans le logement de pointe d'extraction (25) est maintenue dans le logement de pointe d'extraction (25) par un ajustement par pression ou par serrage faisant office de moyen de maintien et d'étanchéité.

10. Canule d'extraction par aspiration (1) selon l'une des revendications précédentes,
**caractérisée en ce que**
la poignée (2) est constituée d'un matériau dur et non élastique, de préférence d'un plastique dur ou d'une matière plastique dure.

11. Canule d'extraction par aspiration (1) selon l'une des revendications précédentes,
**caractérisée en ce que**
la pointe d'extraction (3) est constituée d'un élastomère souple et élastique, de préférence d'une matière plastique souple.

12. Canule d'extraction par aspiration (1) selon l'une des revendications précédentes,
**caractérisée en ce que**
le passage de pointe d'extraction (18) et le passage de poignée (11) présentent une surface intérieure lisse (31, 32) ;
la surface intérieure lisse (31, 32) du passage de pointe d'extraction (18) et du passage de poignée (11) étant de préférence polie spéculaire.

13. Canule d'extraction par aspiration (1) selon l'une des revendications précédentes,
**caractérisée en ce qu'**elle présente quatre bagues d'étanchéité (26a, 26b, 26c, 26d) disposées à distance les unes à côté des autres, qui sont disposées dans la zone de la portion d'enfichage (24) de la pointe d'extraction (3) et qui assurent l'étanchéité aux fluides de la pointe d'extraction (3) dans la poignée (2) ;
les bagues d'étanchéité (26a, 26b, 26c, 26d) étant de préférence disposées dans la zone de l'extrémité distale de l'extrémité d'aspiration (5) de la poignée (2) lorsque la portion d'enfichage (24) de la pointe d'extraction (3) est enfichée dans le logement de pointe d'extraction (25) de la poignée (2).

14. Canule d'extraction par aspiration (1) selon la revendication 13,
**caractérisée en ce que** les bagues d'étanchéité (26a, 26b, 26c, 26d) sont disposées dans la direction distale à côté du fond (29) de la fente annulaire (27) lorsque la partie d'enfichage (24) de la pointe d'extraction (3) est enfichée dans le logement de pointe d'extraction (25) de la poignée (2) ; et/ou
**caractérisée en ce que** les bagues d'étanchéité (26a, 26b, 26c, 26d) sont conformées d'un seul tenant dans la pointe d'extraction (3).
